# EUROPEAN PATENT APPLICATION

(11) **EP 4 434 933 A1**
(43) Date of publication of application: **25.09.2024**
(21) Application number: 22895276.8
(22) Date of filing: 12.10.2022
(51) Int. Cl.: B82B 1/00, B82B 3/00, B82Y 30/00, B82Y 40/00

(54) **STRUCTURE, STRUCTURE MANUFACTURING METHOD, AND PRECURSOR COMPOSITION**

(30) Priority: 19.11.2021 JP 2021188664
(71) Applicant: Sony Group Corporation, Tokyo 108-0075 (JP)
(72) Inventor: SAKAMOTO, Shigeru, Tokyo 108-0075 (JP)
(74) Representative: D Young & Co LLP
(86) International application number: PCT/JP2022/038023
(87) International publication number: WO 2023/089990

(57) **Abstract**

An object is to provide a structural body having high light transmissivity and a high degree of freedom in shape, a manufacturing method for the structural body, and a precursor composition used in the manufacturing method.

A structural body according to an embodiment of the present disclosure includes a plurality of nanoparticles, the plurality of nanoparticles being directly covalent-bonded to each other without interposing an additive component other than the plurality of nanoparticles.

## Description

### Technical Field

The present disclosure relates to a structural body using nanoparticles, for example, a manufacturing method for the structural body, and a precursor composition for the nanoparticles forming the structural body.

### Background Art

For example, PTL 1 discloses a nanocomposite resin composition including a thermosetting resin or a thermoplastic resin, a silane coupling agent, and two types of inorganic fillers that differ from each other in particle diameter or longer diameter. One of the two types of the inorganic fillers is inorganic particles including one type or two or more types among Al₂O₃, MgO, TiO₂, and AlN, on a surface of which is formed with a film of SiO₂ to improve adhesiveness with the resin and to improve its mechanical characteristics and thermal conductivity characteristics to achieve long-term reliability for serving as an insulating material.

### Citation List

### Patent Literature

PTL 1: International Publication No. WO2013/094679

### Summary of the Invention

By the way, it has been desired that a glass material forming an optical component or a glass substrate, for example, have high light transmissivity and a high degree of freedom in shape.

It is desirable to provide a structural body having high light transmissivity and a high degree of freedom in shape, a manufacturing method for the structural body, and a precursor composition.

A structural body according to an embodiment of the present disclosure includes a plurality of nanoparticles, the plurality of nanoparticles being directly covalent-bonded to each other without interposing an additive component other than the plurality of nanoparticles.

A structural body manufacturing method according to the embodiment of the present disclosure allows, after a plurality of alkoxy groups or a plurality of reactive functional groups is used to modify a surface of each of a plurality of nanoparticles, the plurality of alkoxy groups or the plurality of reactive functional groups that has modified the surface of each of plurality of nanoparticles to be covalent-bonded to each other.

A precursor composition according to the embodiment of the present disclosure includes a metal alkoxide molecule represented by General Formula (5) described below. [Chemical Formula 1]

R⁵ₓM(OR⁶)₄₋ₓ (5)

(R⁵ is, separately and independently, a methyl group, an ethyl group, a propyl group, an isopropyl group, a butyl group, a pentyl group, a hexyl group, a heptyl group, an octyl group, a decyl group, a dodecyl group, a hexadecyl group, a vinyl group, or a phenyl group. R⁶ is a methyl group, an ethyl group, a propyl group, or an isopropyl group. M is, separately and independently, silicon, aluminum, titanium, tin, or zinc. X is 0 or an integer equal to or above 1 and equal to or below 2.)

In the structural body according to the embodiment, the structural body manufacturing method according to the embodiment, and the precursor composition according to the embodiment of the present disclosure, a precursor composition including a metal alkoxide molecule represented by General Formula (5) described above is used to form a nanoparticle, and a plurality of the nanoparticles acquired in such a manner as described above is allowed to be directly covalent-bonded to each other without interposing an additive component other than the plurality of nanoparticles. Thereby, a possibility of occurrence of shrinking during manufacturing and occurrence of opacification and a crack due to the shrinking is reduced.

### Brief Description of Drawing

[FIG. 1] FIG. 1 is a schematic diagram illustrating an example of an outline configuration of a structural body according to an embodiment of the present disclosure.
[FIG. 2] FIG. 2 is a diagram illustrating a situation of coupling between a plurality of nanoparticles illustrated in FIG. 1.
[FIG. 3A] FIG. 3A is a diagram illustrating an example of a space arrangement of the plurality of nanoparticles.
[FIG. 3B] FIG. 3B is a diagram illustrating another example of the space arrangement of the plurality of nanoparticles.
[FIG. 3C] FIG. 3C is a diagram illustrating still another example of the space arrangement of the plurality of nanoparticles.
[FIG. 3D] FIG. 3D is a diagram illustrating still another example of the space arrangement of the plurality of nanoparticles.
[FIG. 4] FIG. 4 is a characteristic diagram illustrating a relationship among the space arrangement of the plurality of nanoparticles, a particle diameter, and transmissivity.
[FIG. 5A] FIG. 5A is a schematic diagram illustrating an example of a minimum density structure of the plurality of nanoparticles.
[FIG. 5B] FIG. 5B is a schematic diagram illustrating another example of the minimum density structure of the plurality of nanoparticles.
[FIG. 6] FIG. 6 is a schematic diagram illustrating a closest-packed structure of the plurality of nanoparticles.
[FIG. 7] FIG. 7 is a conceptual diagram in a case where a transmission electron microscope is used to capture an image of the structural body according to the present embodiment.
[FIG. 8] FIG. 8 is a schematic diagram illustrating another example of the outline configuration of the structural body according to the embodiment of the present disclosure.
[FIG. 9] FIG. 9 is a schematic diagram illustrating an outline configuration of a structural body in a case where an amount of a packed resin is increased to be greater than that in gaps among particles.
[FIG. 10] FIG. 10 is a flowchart illustrating an example of manufacturing steps for the structural body according to the embodiment of the present disclosure.
[FIG. 11] FIG. 11 is a diagram illustrating the manufacturing steps illustrated in FIG. 10.
[FIG. 12] FIG. 12 is a flowchart illustrating another example of the manufacturing steps for the structural body according to the embodiment of the present disclosure.
[FIG. 13] FIG. 13 is a diagram illustrating the manufacturing steps illustrated in FIG. 12.
[FIG. 14] FIG. 14 is a conceptual diagram in a case where a transmission electron microscope is used to capture an image of the structural body according to the present disclosure.
[FIG. 15] FIG. 15 is a conceptual diagram in a case where a transmission electron microscope is used to capture an image of a structural body in which a plurality of nanoparticles is coupled to each other with interposing an additive.
[FIG. 16] FIG. 16 is a schematic diagram illustrating an example of an outline configuration of a nanocomposite material formed by using a typical method.
[FIG. 17] FIG. 17 is a schematic diagram illustrating another example of an outline configuration of a nanocomposite material formed by using the typical method.

### Modes for Carrying Out the Invention

In the following, an embodiment of the present technique will be described in detail with reference to the drawings. It is to be noted that the embodiment described below is a specific example of the present disclosure, and the present disclosure is not limited to the following embodiment. In addition, the arrangement, dimensions, dimension ratios, and the like of components in the present disclosure are not limited to the embodiment illustrated in each drawing. It is to be noted that the description will be given in the following order.

### 1. Embodiment (example of a structural body in which a plurality of nanoparticles is directly covalent-bonded to each other without interposing an additive)

1-1. Configuration of Structural body
1-2. Structural body Manufacturing Method
1-3. Workings and Effects

### 2. Use Examples of Structural body

<1. Embodiment>
(1-1. Configuration of Structural body)

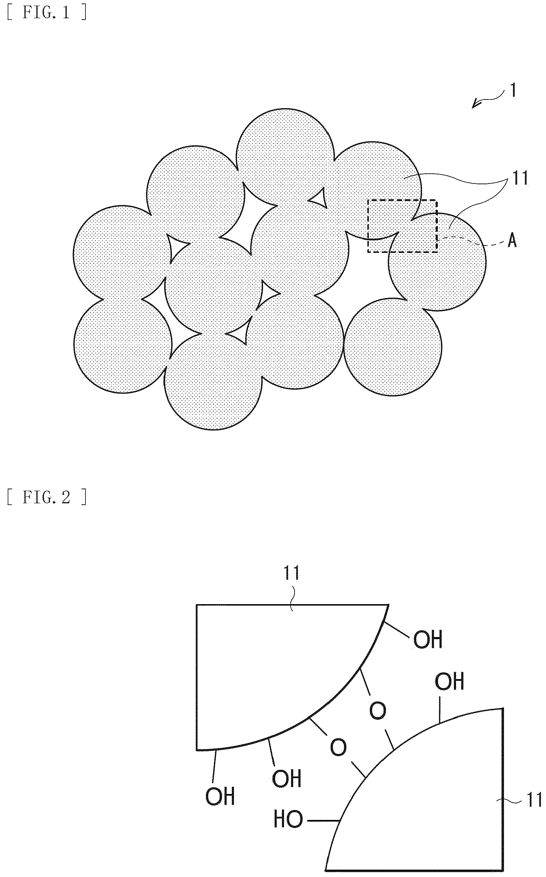

FIG. 1 schematically illustrates an example of a configuration of a structural body (a structural body 1) according to an embodiment of the present disclosure. FIG. 2 illustrates, by enlarging a region A illustrated in FIG. 1, an aspect of coupling between a plurality of nanoparticles. The structural body 1 is, for example, a glass material that is possible to be used as a glass substrate or an alternative material to a plastic material having optical transparency.

The structural body 1 according to the present embodiment includes a plurality of nanoparticles 11, in which the plurality of nanoparticles 11 is directly covalent-bonded to each other without interposing an additive component other than the plurality of nanoparticles 11.

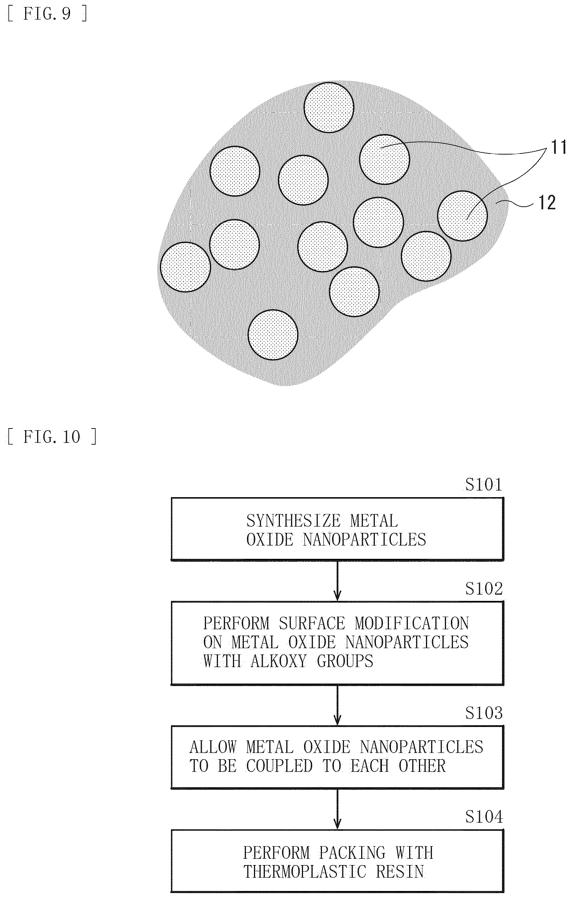

Note that an "additive component" refers to a component that has not yet been bonded to nanoparticles 11 at a stage before a ligation reaction described later occurs (for example, step S103, see FIG. 10). Although a functional group modified on a surface of each of nanoparticles 11 is not regarded as an additive component, for example, a resin or a molecule is regarded as an additive component in a case where the resin or the molecule is added, separately from the nanoparticles 11. Furthermore, "direct covalent bond" refers to a case where nanoparticles 11 are coupled to each other via covalent bonding. Coupling to an additive component via covalent bonding and coupling via non-covalent bonding such as ionic bonding, metallic bonding, and hydrogen bonding, and bonding using an intermolecular force are not regarded as direct covalent bonding.

The plurality of nanoparticles 11 is a complex oxide of metal atoms having resistance to oxidation. The plurality of nanoparticles 11 is one where the metal atoms (M) three dimensionally form a covalent bonding network together with oxygen atoms (O) via M-O-M bonding, as illustrated in FIG. 2, for example. Specifically, it is an oxide of zirconium (Zr), titanium (Ti), tin (Sn), silicon (Si), aluminum (Al), or zinc (Zn) having optical transparency. Among those metal oxides described above, it is desirable to use, as the plurality of nanoparticles 11, an Si oxide or an Al oxide having low refraction factor and particularly high optical transparency.

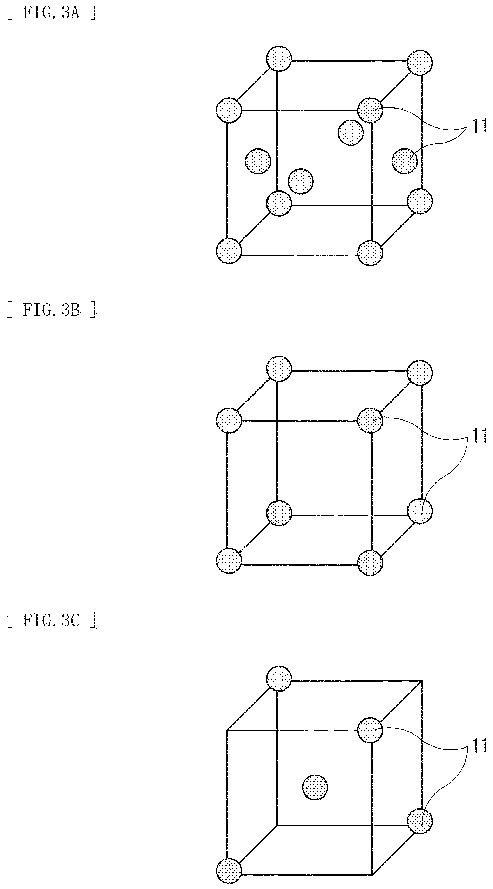

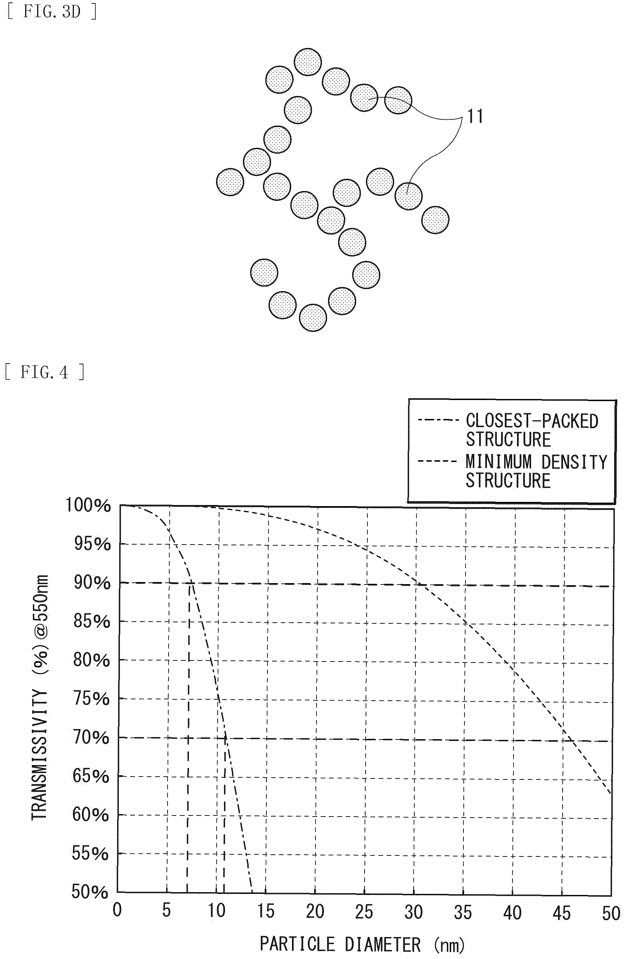

In a structural body 1, a plurality of nanoparticles 11 has one packing structure among a cubic closest-packed structure, as illustrated in FIG. 3A, a simple cubic structure, as illustrated in FIG. 3B, a diamond structure, as illustrated in FIG. 3C and an aerogel structure, as illustrated in FIG. 3D, for example.

In the cubic closest-packed structure, one nanoparticle 11 has 12 bonding points to other nanoparticles 11, and has a packing density of 74% by volume. In the simple cubic structure, one nanoparticle 11 has six bonding points to other nanoparticles 11, and has a packing density of 52% by volume. In the diamond structure, one nanoparticle 11 has four bonding points to other nanoparticles 11, and has a packing density of 34% by volume. In the aerogel structure, one nanoparticle 11 has one to three bonding points to other nanoparticles 11, and has a packing density equal to or higher than 1% by volume and equal to or lower than 10% by volume. Among them, the plurality of nanoparticles 11 forming the structural body 1 each has four or more bonding points for bonding to each other, and is thus fixed to each other. Therefore, by taking into account mechanical strength of the structural body 1, it is desirable that the packing density of the plurality of nanoparticles 11 be equal to or higher than 34% by volume and equal to or lower than 74% by volume.

Note that it is possible to measure the packing density by using a method described below.

A structural body 1 serving as a target to be measured is first processed and thinned with a focused ion beam (FIB) method, for example. As preliminary processing of observing a transmission electron microscope (TEM) image of a cross section, described later, in a case where the FIB method is used, a carbon film and a tungsten thin film are formed as protective films. The carbon film is formed with an evaporation method on a surface of the structural body 1. The tungsten thin film is formed with the evaporation method or a sputtering method on the surface of the structural body 1. Through such thinning as described above, a cross section of the structural body 1 is formed.

A transmission electron microscope (Tecnai G2 manufactured by FEI) is used to perform cross-sectional observation on the cross section of the acquired thin piece sample in such a manner that it is possible to observe a plurality of nanoparticles 11 at an acceleration voltage of 200 kV and in a field of view of 50 nm x 50 nm, and to capture a TEM photograph. Note that an imaging position is selected at random on the thin piece sample, at which observation is performed in five fields of view, for example. Next, TEM-dedicated image analysis software, for example, is used to calculate a total area (a number of pixels) that the cross section of the nanoparticles occupies within one field of view, and then calculate a ratio (a nanoparticle area ratio) of the whole area (the number of pixels) in the field of view. Next, nanoparticle area ratios described above are calculated in the five fields of view, and an arithmetic mean value of the nanoparticle area ratios is further calculated and is regarded as packing density.

Predetermined light transmissivity is demanded for the structural body 1. It is possible to use the structural body 1 having a transmissivity of 70% or higher for window glass of motor vehicles, for example. When the structural body 1 has a transmissivity of 90% or higher, for example, it is possible to use the structural body 1 for window glass of buildings, glass substrates, and alternative materials to plastic materials, for example.

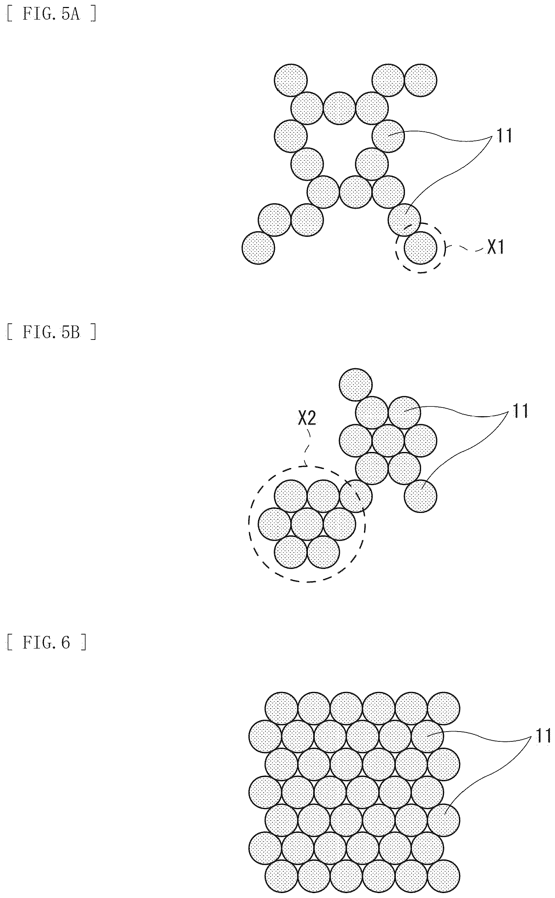

FIG. 4 illustrates transmissivity with respect to a wavelength of 550 nm in a case where a structural body 1 having a thickness of 1 mm is formed. In a case where a plurality of nanoparticles 11 forming the structural body 1 has an aerogel structure representing a minimum density structure, for example, there may be two cases where the plurality of nanoparticles 11 is all present in a state of each having a primary particle diameter (see X1 in the drawing), as illustrated in FIG. 5A, for example, and secondary particles (see X2 in the drawing) in which some of the plurality of nanoparticles 11 are condensed with each other are included, as illustrated in FIG. 5B, for example. In a structural body 1 having a low density structure, it is not possible to ignore negative effects of light scattering due to such secondary particles. Therefore, in a case where a plurality of nanoparticles 11 has an aerogel structure, a transmissivity of 70% is acquired in a case where a particle diameter (a secondary particle diameter) is equal to or smaller than 46 nm, including the secondary particles. On the other hand, in a case where a plurality of nanoparticles 11 forming a structural body 1 has a closest-packed structure, the plurality of nanoparticles 11 is arrayed substantially evenly, as illustrated in FIG. 6, for example. In such a structure as described above, a transmissivity of 70% is acquired in a case where a primary particle diameter is equal to or smaller than 11 nm. Furthermore, a transmissivity of 90% is acquired in a case where a primary particle diameter is equal to or smaller than 7 nm.

Note that a primary particle diameter of each of nanoparticles 11 is acquired as described below.

A structural body 1 serving as a target to be measured is first processed and thinned with the FIB method, for example. As preliminary processing of observing a TEM image of a cross section, described later, in a case where the FIB method is used, a carbon film and a tungsten thin film are formed as protective films. The carbon film is formed with the evaporation method on the surface of the structural body 1. The tungsten thin film is formed with the evaporation method or the sputtering method on the surface of the structural body 1. Through such thinning as described above, the cross section of the structural body 1 is formed.

A transmission electron microscope (Tecnai G2 manufactured by FEI) is used to perform cross-sectional observation on the cross section of the acquired thin piece sample in such a manner that it is possible to observe a plurality of nanoparticles 11 at an acceleration voltage of 200 kV and in a field of view of 50 nm x 50 nm, and to capture a TEM photograph. Note that an imaging position is selected at random on the thin piece sample.

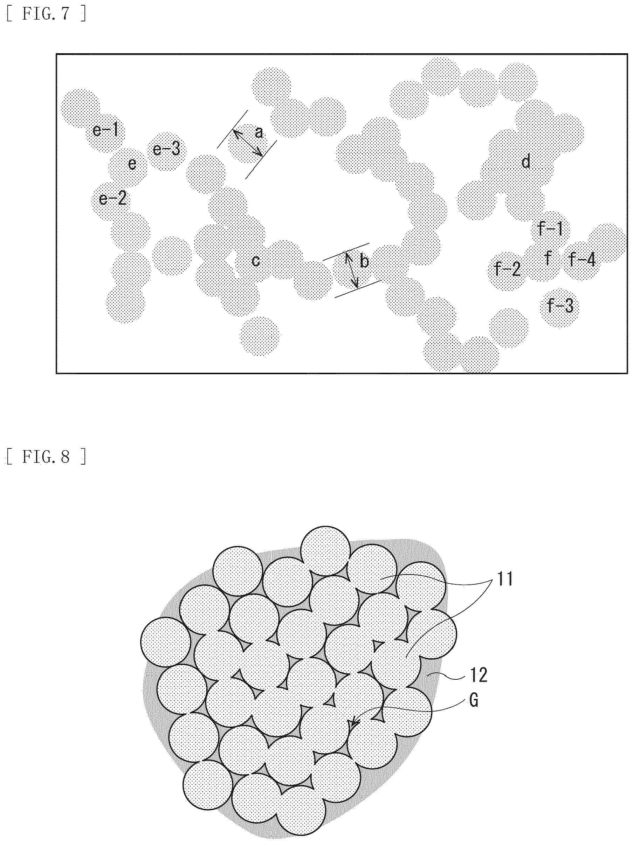

Next, 50 nanoparticles 11, for which it is possible to clearly confirm their diameters in directions of an observation plane, are selected from the captured TEM photograph. In a case where a number of nanoparticles 11 that are present in one field of view, for which it is possible to clearly confirm their diameters, is below 50, 50 nanoparticles 11, for which it is possible to clearly confirm their diameters in the directions of the observation plane from a plurality of field of views, are selected. FIG. 7 is a conceptual diagram of a TEM photograph in a case where a transmission electron microscope is used to capture an image of a structural body 1. In FIG. 7, for example, a nanoparticle a and a nanoparticle b, for which it is possible to clearly confirm their diameters, are selected. On the other hand, a nanoparticle c and a nanoparticle d, for example, are overlapping with other nanoparticles 11 in depth directions of observation, for which it is not possible to confirm their shapes, and are not appropriate as targets to be measured. A maximum diameter of each of the selected 50 nanoparticles 11 is measured.

Note herein that a maximum diameter refers to a maximum distance among distances each between two parallel lines both drawn at all angles at which the lines are in contact with a contour of a nanoparticle 11 (i.e., a maximum Feret's diameter). To measure a maximum diameter (a maximum Feret's diameter), a diameter of a particle portion, excluding an alkoxy group or a reactive functional group modified on a surface of each of the nanoparticles 11, is measured. By acquiring a median of the 50 maximum diameters (the maximum Feret's diameters) acquired in this manner, a primary particle diameter (a mean particle diameter) of each of the nanoparticles 11 is acquired.

In the structural body 1, the plurality of nanoparticles 11 covalent-bonded to each other forms a coupled body. The coupled body has gaps G each among adjacent ones of the plurality of nanoparticles 11, as illustrated in FIG. 8, for example. It is desirable that, as the structural body 1, the gaps G be packed with a resin 12 such as a thermoplastic resin. Thereby, mechanical strength of the structural body 1 improves. Furthermore, since a gap in refraction factor between each of the plurality of nanoparticles 11 and each of the gaps G is lowered, optical scattering is reduced, improving optical transparency of the structural body 1.

Note that it is desirable that a volume of the resin 12 packed in the structural body 1 be equal to or smaller than a volume of the gaps G formed among the plurality of nanoparticles 11 forming the structural body 1. In a case where the volume of the resin 12 being packed is greater than the volume of the gaps G formed among the plurality of nanoparticles 11 forming the structural body 1, the resin 12 is present around the nanoparticles 11, as illustrated in FIG. 9, for example. In such a structural body as described above, negative effects of the resin 12 become greater, lowering glass-original characteristics such as optical transparency, durability, mechanical strength, hardness, and stability.

### (1-2. Structural body Manufacturing Method)

FIG. 10 is a flowchart illustrating an example of manufacturing steps for a structural body 1.

Nanoparticles of a metal oxide are first synthesized as a plurality of nanoparticles 11 forming the structural body 1 (step S101). Although, generally, a manufacturing method for nanoparticles is roughly divided into two types, that is, a gas phase method and a liquid phase method, using the liquid phase method makes it possible to allow minute nanoparticles each having a diameter of approximately 10 nm to be isolated without allowing the nanoparticles to be condensed, as described above. As a precursor composition for the liquid phase method, it is possible to form a three dimensional metal oxide skeleton (M-O-M) acquired through a hydrolysis reaction and a condensation polymerization reaction, and, as a precursor composition for the nanoparticle 11, it is possible to select a metal alkoxide molecule represented by General Formula (5) described below. As to the metal alkoxide molecules, even the molecules in which some of alkoxy groups are substituted by non-hydrolysis functional groups do not cause a problem in forming a metal oxide skeleton. After the precursor composition is dissolved in water or an organic solvent, adjusting pH of the solution to have acidity or alkalinity causes a polymerization reaction to start to form metal oxide nanoparticles (nanoparticles 11).
[Chemical Formula 2]

R⁵ₓM(OR⁶)₄₋ₓ (5)

(R⁵ is, separately and independently, a methyl group, an ethyl group, a propyl group, an isopropyl group, a butyl group, a pentyl group, a hexyl group, a heptyl group, an octyl group, a decyl group, a dodecyl group, a hexadecyl group, a vinyl group, or a phenyl group. R⁶ is a methyl group, an ethyl group, a propyl group, or an isopropyl group. M is, separately and independently, silicon, aluminum, titanium, tin, or zinc. X is 0 or an integer equal to or above 1 and equal to or below 2.)

Note that, as long as a final diameter of each of nanoparticles 11 is equal to or smaller than 10 nm, the present invention is not limited to the manufacturing method described above. Some reference literatures are exemplified below. Literature 1 (T. Yokoi et al. Chem. Mater. 2009, 21, 3719 - 3729), for example, has reported that silica nanoparticles each having a diameter of 8 nm are formed in an aqueous solution in which amino acid is present, describing that coating amino acid molecules on a surface of each of the nanoparticles makes it possible to achieve isolation without causing condensation. Literature 2 (S. Sakamoto et al. Langmuir 2018, 34, 1711 - 1717) has reported that a reversed micelle type liquid crystalline phase is used as a template to form silica nanoparticles and titanium oxide nanoparticles each having a diameter of 3 nm. Furthermore, the manufacturing methods described above may be variously modified. For example, the drying methods described in Literatures 1 and 2 may be replaced with a drying step using a vacuum concentration machine such as a rotary evaporator. Thereby, it is possible to improve mass productivity.

Next, the plurality of nanoparticles 11 is allowed to be dispersed in a solvent to perform surface modification (step S102). The dispersing liquid in which the plurality of nanoparticles 11 is dispersed is added with a metal alkoxide compound represented by General Formula (1) described below or a metal chloride represented by General Formula (2) described below, and is heated as necessary. Thereby, the plurality of nanoparticles 11 having surfaces modified with a plurality of alkoxy groups to have hydrophobicity is acquired.
[Chemical Formula 3]

R¹ₓM(OR²)₄₋ₓ (1)

R¹ₓMCl₄₋ₓ (2)

(R¹ is, separately and independently, a methyl group, an ethyl group, a propyl group, an isopropyl group, a butyl group, a pentyl group, a hexyl group, a heptyl group, an octyl group, a decyl group, a dodecyl group, a hexadecyl group, a vinyl group, or a phenyl group. R² is a methyl group, an ethyl group, a propyl group, or an isopropyl group. M is, separately and independently, silicon, aluminum, titanium, tin, or zinc. X is 0 or an integer equal to or above 1 and equal to or below 2.)

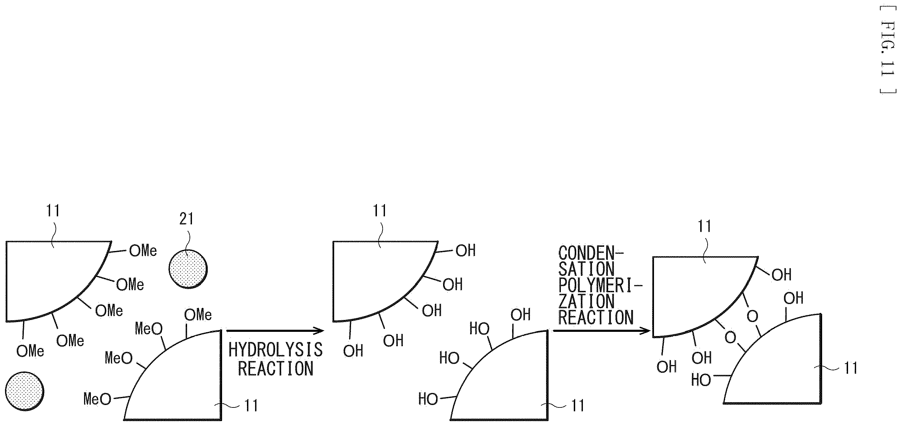

Next, the plurality of nanoparticles 11 is allowed to be coupled to each other (step S103). After the plurality of nanoparticles 11 having the surfaces modified with the plurality of alkoxy groups is first allowed to be dispersed in a solvent, as illustrated in FIG. 11, for example, the dispersing liquid is added with an acid-and-base forming agent 21 that causes an external stimulus to generate acid and base. After that, the dispersing liquid is poured onto a predetermined mold or substrate, and the solvent is caused to be volatilized. At that time, by applying light irradiation or heat as an external stimulus, for example, the alkyl groups are separated from the plurality of alkoxy groups modified on the surface of each of the plurality of nanoparticles 11 through a hydrolysis reaction to generate hydroxy groups, and covalent bonding is formed among the plurality of nanoparticles 11 through a condensation polymerization reaction due to dehydration among the molecules to couple the plurality of nanoparticles to each other. As described above, a glass material having a three dimensional metal oxide skeleton is formed.

Examples of the acid-and-base forming agent include sulphone-based, sulfonium salt-based, iodonium salt-based, and non-ion-based photoacid forming agents and carboxylate-based, borate-based, carbamate-based, and amide-based photobase forming agents. Other examples of the acid-and-base forming agent include thermal acid forming agents and DBU-based, DBN-based, and phosphonium-based thermal base forming agents.

Next, gaps G among the plurality of nanoparticles 11 are packed with the resin 12 (step S104). Packing of the resin 12 is achieved by, for example, after a thermoplastic resin serving as the resin 12 is heated and melted, the heated and melted thermoplastic resin is caused to permeate into the coupled body of the plurality of nanoparticles 11. After that, the heated, melted, and permeated thermoplastic resin is caused to be solidified through slow cooling. Otherwise, packing of the resin 12 is achieved by, for example, after a thermoplastic resin serving as the resin 12 is caused to dissolve in an organic solvent, the dissolved thermoplastic resin is caused to permeate into the coupled body of the plurality of nanoparticles 11. After that, the organic solvent is heated and caused to be volatilized. The structural body 1 in which the gaps are packed with the resin 12 is acquired, as described above.

Note that, although the example where the resin 12 is packed after the plurality of nanoparticles 11 is coupled to each other has been described above, the present invention is not limited to this example. For example, the resin 12 may be added together with the plurality of nanoparticles 11 before the plurality of nanoparticles 11 is allowed to be coupled to each other, to form a glass material having a three dimensional metal oxide skeleton, as described above. Since the resin 12 may inhibit coupling of the plurality of nanoparticles 11 to each other, however, packing the resin 12 after coupling makes it possible to acquire further stiff glass (the structural body 1).

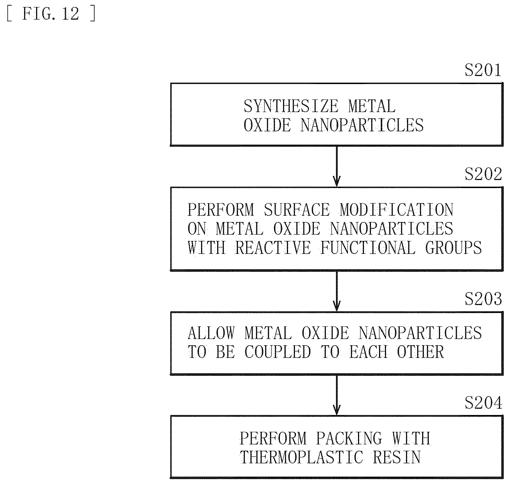

FIG. 12 is a flowchart illustrating another example of the manufacturing steps for the structural body 1.

Similar to those described above, nanoparticles of a metal oxide are first synthesized as a plurality of nanoparticles 11 forming a structural body 1 (step S201).

Next, the plurality of nanoparticles 11 is allowed to be dispersed in a solvent to perform surface modification (step S202). The dispersing liquid in which the plurality of nanoparticles 11 is dispersed is added with an organic silane compound represented by General Formula (3) described below or General Formula (4) described below, and is heated as necessary. Thereby, the plurality of nanoparticles 11 having surfaces modified with the plurality of reactive functional groups to have hydrophobicity is acquired. [Chemical Formula 4]

R³_{y}Si(OR⁴)_{4-y} (3)

R³_{y}SiCl_{4-y} (4)

(R³ is, separately and independently, a hydrogen atom, a vinyl group, an acryloxy group, a methacryloxy group, an aminopropyl group, a glycidoxypropyl group, or a mercaptopropyl group. R⁴ is a methyl group, an ethyl group, a propyl group, or an isopropyl group. y is an integer equal to or above 1 and equal to or below 3.)

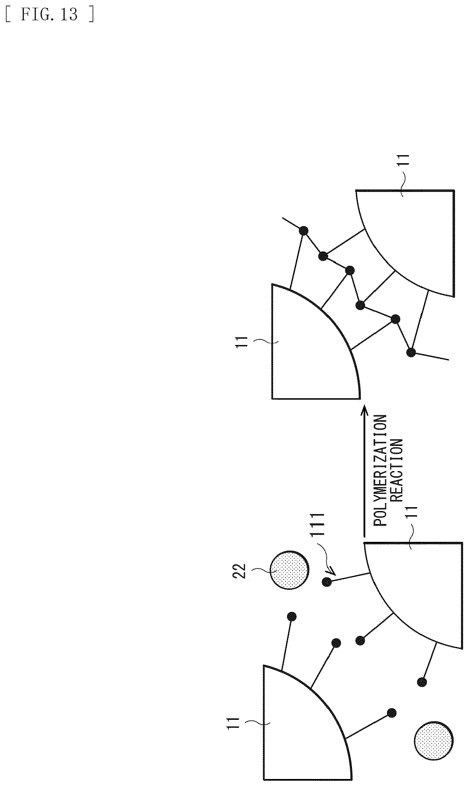

Next, the plurality of nanoparticles 11 is allowed to be coupled to each other (step S203). In a case where a reaction of reactive functional groups each other is a radical reaction or an organic reaction such as cationic polymerization or anionic polymerization, for example, the plurality of nanoparticles 11 having the surfaces modified with a plurality of reactive functional groups is first caused to be dispersed, as illustrated in FIG. 13, then, the dispersing liquid is added with an appropriate polymerization initiating reagent 22. After that, the dispersing liquid is poured onto a predetermined mold or substrate, and the solvent is caused to be volatilized. At that time, as light irradiation or heat is applied as an external stimulus, for example, a cross-linking reaction (a polymerization reaction) advances among and couples the plurality of nanoparticles 11 to each other. As described above, glass having a hybrid skeleton based on three dimensional metal oxides and organic covalent bonding (a structural body 1) is formed.

Next, gaps G among the plurality of nanoparticles 11 are packed with the resin 12, similar to those described above (step S204). The structural body 1 in which the gaps are packed with the resin 12 is acquired, as described above.

Note that it is possible to confirm whether or not the plurality of nanoparticles 11 forming the structural body 1 is directly covalent-bonded to each other by using a method described below, for example.

In a case where a plurality of nanoparticles 11 is directly covalent-bonded to each other, for example, a structural body 1 does not dissolve partially or wholly in all of a nonprotic and low polarity solvent, a nonprotic and medium polarity solvent, a nonprotic and high polarity solvent, and a protic and high polarity solvent. Examples of the nonprotic and low polarity solvent include hexane and toluene. Examples of the nonprotic and medium polarity solvent include acetone and tetrahydrofuran. Examples of the nonprotic and high polarity solvent include dimethylformamide and dimethyl sulfoxide. Examples of the protic and high polarity solvent include water and ethanol. In a case where nanoparticles are coupled to each other through non-covalent bonding such as ionic bonding or hydrogen bonding, or bonding using an intermolecular force, on the other hand, it dissolves in one of those solvents described above.

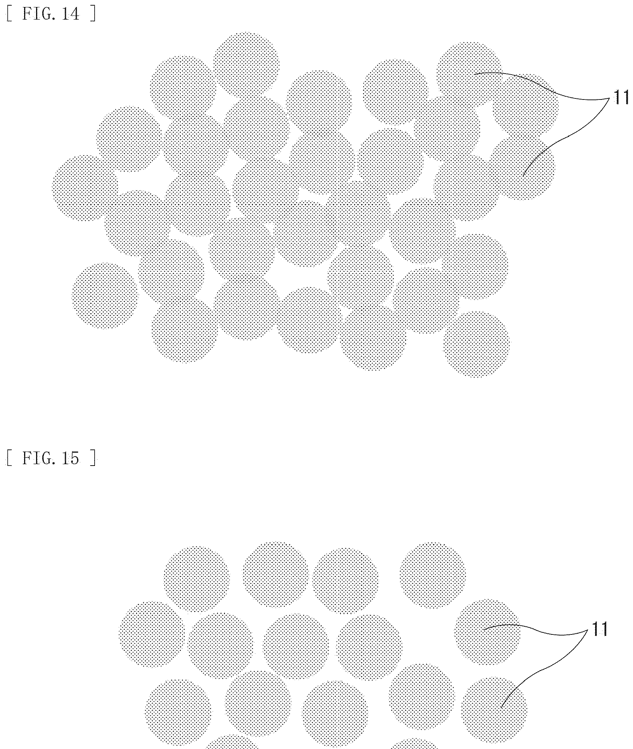

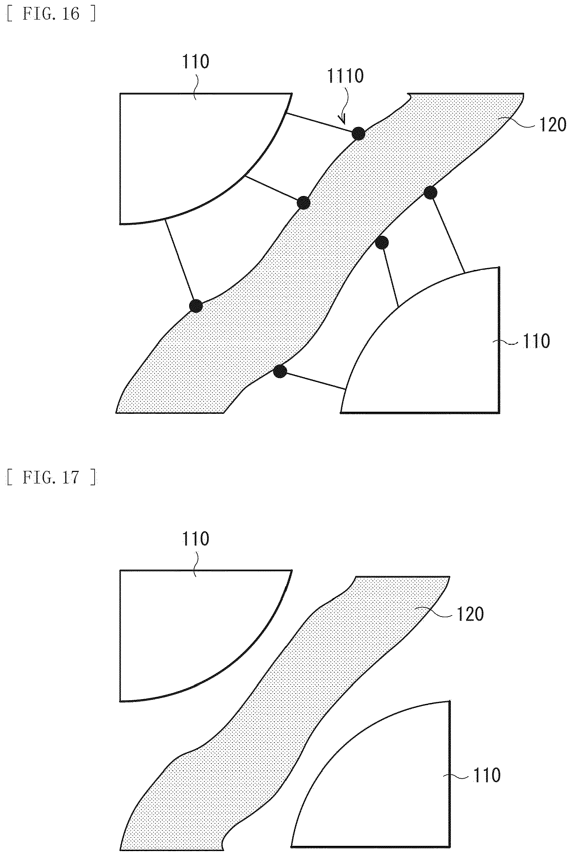

In a case where a plurality of nanoparticles 11 is directly covalent-bonded to each other, for example, a TEM image of a structural body 1, which is captured by using a transmission electron microscope, becomes such an image as illustrated in FIG. 14. In a case where a plurality of nanoparticles 11 is coupled to each other via an additive component including an organic substance, such as the resin 12 (for example, see FIGs. 16 and 17), where it is not possible to confirm the additive component with the transmission electron microscope, the acquired image will be such a TEM image that the plurality of nanoparticles 11 is solely separated, as illustrated in FIG. 15.

It is possible to confirm whether or not a plurality of nanoparticles 11 forming a structural body 1 is directly covalent-bonded to each other by using, in addition to the method described above, mass spectrometry (MS), nuclear magnetic resonance (NMR), infrared absorption spectroscopy (IR), or energy dispersed type X-ray analysis (EDX), for example.

### (1-3. Workings and Effects)

In the structural body 1 according to the present embodiment, a precursor composition including a metal alkoxide molecule represented by General Formula (5) described above is used to form a nanoparticle 11, and a plurality of the nanoparticles 11 acquired in such a manner as described above is allowed to be directly covalent-bonded to each other without interposing an additive component other than the plurality of nanoparticles 11. Thereby, a possibility of occurrence of shrinking during manufacturing and occurrence of opacification and a crack due to the shrinking is reduced. These workings and effects will now be described herein.

Glass has features such as high transparency, durability, mechanical strength, hardness, and stability, and is widely utilized not only for window glass, mirrors, lenses, and eating utensils, but also in industry fields of optical components and substrates, for example.

Glass is a complex oxide of various metal atoms, where, generally, the metal atoms (M) three dimensionally form a covalent bonding network together with oxygen atoms (O) via M-O-M bonding. To allow a general glass material to be solidified into a desired shape, there is generally a great issue in terms of environmental burdens on manufacturing such as a raw material is melted at a high temperature equal to or higher than 1000°C. Furthermore, another issue on general glass materials is that it is not possible to achieve a complex form of an organic substance and metal. Furthermore, still another issue on general glass materials is that there is a small degree of freedom in shape.

As a method of solving these issues, for example, such a glass manufacturing method has been under development that metal alkoxide and sodium salt are used as precursors, and are allowed to undergo hydrolysis and condensation polymerization at a low temperature. Even in a case where the method described above is used, however, occurrence of opacification and a crack due to shrinkage during condensation polymerization may cause the features as glass to be lost. Therefore, plastic materials that are low in terms of durability and strength, but that are easy in molding at a low temperature, compared with glass materials, are used as alternative materials.

By the way, a nanocomposite material including inorganic compound particles and an organic material has been under development in recent years as an alternative, cost-effective material to the glass materials. A nanocomposite material is an organic- and-inorganic complex compound material in which inorganic particles are dispersed in a polymer resin in which an organic compound is polymerized. A nanocomposite material using a hardening resin as a polymer resin has, for example, such a structure that a plurality of inorganic particles (nanoparticles 110) and a resin 120 are coupled to each other via reactive functional groups 1110, and the plurality of nanoparticles 110 is not coupled to each other, as illustrated in FIG. 16, for example. A nanocomposite material using a thermoplastic resin as a polymer resin has, for example, such a structure that a plurality of nanoparticles 110 and a resin 120 are not coupled to each other, and the plurality of nanoparticles 110 is not coupled to each other. Since there is no polymer resin interposed among a plurality of inorganic particles in a general nanocomposite material, as described above, there is such an issue that features as glass such as durability, mechanical strength, hardness, and thermal stability are insufficient.

In the present embodiment, on the other hand, a metal alkoxide molecule represented by General Formula (5) described above is selected as a precursor composition, and is used to form the nanoparticles 11. On the surface of each of the acquired plurality of nanoparticles, a plurality of alkoxy groups or a plurality of reactive functional groups 111 is modified, an appropriate reaction initiating reagent is added, and the plurality of nanoparticles 11 is allowed to be directly covalent-bonded to each other. Thereby, compared with the general glass manufacturing method described above, it is possible to perform condensation polymerization under a lower temperature condition such as room temperature to acquire the structural body 1 in a bulk shape without inducing opacification and a crack, for example.

In the structural body 1 according to the present embodiment, as described above, it is possible to provide a glass material having high light transmissivity and a high degree of freedom in shape.

Furthermore, since the plurality of nanoparticles 11 is directly covalent-bonded to each other in the structural body 1 according to the present embodiment, it is possible to acquire high durability, mechanical strength, hardness, and stability.

Furthermore, the resin 12 is packed at a volume equal to or smaller than that of the gaps G in the gaps G each formed among adjacent ones of the plurality of nanoparticles 11 in the coupled body in which the plurality of nanoparticles 11 is covalent-bonded to each other in the structural body 1 according to the present embodiment. Thereby, it is possible to further improve the mechanical strength of the structural body 1. Furthermore, since a gap in refraction factor between each of the plurality of nanoparticles 11 and each of the gaps G is lowered, optical scattering is reduced, further improving light transmissivity of the structural body 1.

### <2. Use Examples of Structural body>

It is possible to use the structural body 1 according to the embodiment described above for not only window glass, mirrors, lenses, and eating utensils, but also in various cases as described below, for example.

For example, it is possible to use the structural body 1 as glass used for building materials, motor vehicles, displays, decorative materials, and home electric appliances. Specifically, it is possible to use the structural body as window glass, design glass, interior glass, and glass coating, in the building materials. In the motor vehicles, it is possible to use the structural body as front glass, display-purpose cover glass, and privacy glass. In the displays, it is possible to use the structural body as glass substrates for flat panel displays and cover glass for touch panels. In the decorative materials, it is possible to use the structural body as tableware, flower vases, and tiles. In the home electric appliances, it is possible to use the structural body as constituent materials of lighting appliances and small home electric appliances.

For example, it is possible to use the structural body 1 as an alternative material to plastic resins used for housings of electronic apparatuses, for space, aviation, and motor vehicles, as construction materials, for household appliances, and as decorative materials. Specifically, it is possible to use the structural body as an exterior part such as a bumper or a radiator grill, in the space, aviation, and motor vehicles. It is possible to use the structural body as interior and exterior materials, heat insulating materials, piping materials, civil engineering materials, in the construction materials. It is possible to use the structural body as those for baths, toilets, and kitchens, in the household appliances. It is possible to use the structural body as tableware, flower vases, lighting appliances, and small home electric appliances, in the decorative materials.

Note that the present technique may relate to Goal 13 "CLIMATE ACTION" and Goal 14 "LIFE BELOW WATER" relating to Sustainable Development Goals (SDGs) adopted in the UN summit held in 2015. Plastic materials produced from petroleum as raw materials for those applications described above have been used so far. However, such issues have been known that discarded plastic materials flow into the sea to become floating plastic garbage that is harmful to living bodies to cause sea contamination, and, when discarded plastic materials are burnt, greenhouse effect gases are produced to cause global warming. By using the configuration of the present technique, it is possible to use a plastic alternative material produced from a rock-derived inorganic oxide as a raw material. With such a plastic alternative material as described above, in which a raw material has biocompatibility and hydrolyzability, there is a low risk of becoming floating garbage that is harmful to living bodies even when the plastic alternative material flows into the sea. Furthermore, such a plastic alternative material as described above, in which a main component produced when burnt is water vapor and for which it is expected that greenhouse effect gases to be discharged are extremely small in amount, compared with the plastic materials, may contribute to prevent sea contamination and to suppress global warming.

Although the present disclosure has been described with reference to the embodiment and the use examples, the present disclosure is not limited to the embodiment and the use examples described above, but may be modified in a wide variety of ways.

Note that the effects described in the specification are mere examples. The effects of the technique are not limited to the effects described in the specification. There may be any other effects than those described herein.

Note that the present technique may have such configurations as described below. With the present technique having the configurations described below, a precursor composition including a metal alkoxide molecule is used to form a nanoparticle, and a plurality of the nanoparticles acquired in such a manner as described above is allowed to be directly covalent-bonded to each other without interposing an additive component other than the plurality of nanoparticles. Thereby, a possibility of occurrence of shrinking during manufacturing and occurrence of opacification and a crack due to the shrinking is reduced. Thus, it is possible to provide a structural body having high light transmissivity and a high degree of freedom in shape.
(1) A structural body including a plurality of nanoparticles, the plurality of nanoparticles being directly covalent-bonded to each other without interposing an additive component other than the plurality of nanoparticles.
(2) The structural body described in (1), in which packing density of the plurality of nanoparticles is equal to or higher than 1% by volume and equal to or lower than 74% by volume.
(3) The structural body described in (1), in which packing density of the plurality of nanoparticles is equal to or higher than 34% by volume and equal to or lower than 74% by volume.
(4) The structural body described in any one of (1) to (3), in which a primary particle diameter of each of the plurality of nanoparticles is equal to or smaller than 11 nm.
(5) The structural body described in any one of (1) to (3), in which a primary particle diameter of each of the plurality of nanoparticles is equal to or smaller than 7 nm.
(6) The structural body described in any one of (1) to (5), in which a secondary particle diameter of some of the plurality of nanoparticles is equal to or smaller than 46 nm.
(7) The structural body described in any one of (1) to (6), in which
   the plurality of nanoparticles is covalent-bonded to each other to form a coupled body,
   the coupled body has gaps each among adjacent ones of the plurality of nanoparticles, and
   the gaps are packed with a thermoplastic resin.
(8) The structural body described in (7), in which a volume of the thermoplastic resin being packed is equal to or smaller than a volume of the gaps.
(9) The structural body described in any one of (1) to (8), in which each of the plurality of nanoparticles is a metal oxide.
(10) The structural body described in any one of (1) to (9), in which each of the plurality of nanoparticles is an oxide of zirconium, titanium, tin, silicon, aluminum, or zinc.
(11) The structural body described in any one of (1) to (9), in which each of the plurality of nanoparticles is an oxide of silicon or aluminum.
(12) A structural body manufacturing method including, after a plurality of alkoxy groups or a plurality of reactive functional groups is used to modify a surface of each of a plurality of nanoparticles, allowing the plurality of alkoxy groups or the plurality of reactive functional groups that has modified the surface of each of the plurality of nanoparticles to be covalent-bonded to each other.
(13) The structural body manufacturing method described in (12), further including, after each of the plurality of nanoparticles that has been modified by the plurality of alkoxy groups is allowed to be dispersed in a solvent, and an acid-and-base forming agent is further added, allowing the solvent to be volatilized while an external stimulus is applied in a predetermined mold or on a predetermined substrate.
(14) The structural body manufacturing method described in (13), in which light irradiation or heating is used as the external stimulus.
(15) The structural body manufacturing method described in (12), further including, after each of the plurality of nanoparticles that has been modified by the plurality of reactive functional groups is allowed to be dispersed in a solvent, and a reaction initiating reagent is further added, allowing the solvent to be volatilized while an external stimulus is applied in a predetermined mold or on a predetermined substrate.
(16) The structural body manufacturing method described in (15), in which light irradiation or heating is used as the external stimulus.
(17) The structural body manufacturing method described in any one of (12) to (14), further including adding a metal alkoxide compound represented by General Formula (1) described below or a metal chloride represented by General Formula (2) described below to modify the surface of each of the plurality of nanoparticles with the plurality of alkoxy groups.
   [Chemical Formula 1]

   R¹ₓM(OR²)₄₋ₓ (1)

   R¹ₓMCl₄₋ₓ (2)

   (R¹ is, separately and independently, a methyl group, an ethyl group, a propyl group, an isopropyl group, a butyl group, a pentyl group, a hexyl group, a heptyl group, an octyl group, a decyl group, a dodecyl group, a hexadecyl group, a vinyl group, or a phenyl group. R² is a methyl group, an ethyl group, a propyl group, or an isopropyl group. M is, separately and independently, silicon, aluminum, titanium, tin, or zinc. X is 0 or an integer equal to or above 1 and equal to or below 2.)
(18) The structural body manufacturing method described in any one of (12), (15), and (16), further including adding an organic silane compound represented by General Formula (3) described below or General Formula (4) described below to modify the surface of each of the plurality of nanoparticles with the plurality of reactive functional groups. [Chemical Formula 2]

   R³_{y}Si(OR⁴)_{4-y} (3)

   R³_{y}SiCl_{4-y} (4)

   (R³ is, separately and independently, a hydrogen atom, a vinyl group, an acryloxy group, a methacryloxy group, an aminopropyl group, a glycidoxypropyl group, or a mercaptopropyl group. R⁴ is a methyl group, an ethyl group, a propyl group, or an isopropyl group. y is an integer equal to or above 1 and equal to or below 3.)
(19) The structural body manufacturing method described in any one of (12) to (18), further including, after the plurality of nanoparticles is allowed to be covalent-bonded to each other to form a coupled body, allowing a thermoplastic resin to be permeated into gaps each among adjacent ones of the plurality of nanoparticles.
(20) A precursor composition including a metal alkoxide molecule represented by General Formula (5) described below.
   [Chemical Formula 3]

   R⁵ₓM(OR⁶)₄₋ₓ (5)

   (R⁵ is, separately and independently, a methyl group, an ethyl group, a propyl group, an isopropyl group, a butyl group, a pentyl group, a hexyl group, a heptyl group, an octyl group, a decyl group, a dodecyl group, a hexadecyl group, a vinyl group, or a phenyl group. R⁶ is a methyl group, an ethyl group, a propyl group, or an isopropyl group. M is, separately and independently, silicon, aluminum, titanium, tin, or zinc. X is 0 or an integer equal to or above 1 and equal to or below 2.)

The present application claims the benefit of Japanese Priority Patent Application JP 2021-188664 filed with the Japan Patent Office on November 19, 2021, the entire contents of which are incorporated herein by reference.

It should be understood by those skilled in the art that various modifications, combinations, sub-combinations, and alterations may occur depending on design requirements and other factors insofar as they are within the scope of the appended claims or the equivalents thereof.

## Claims

1. A structural body comprising a plurality of nanoparticles, the plurality of nanoparticles being directly covalent-bonded to each other without interposing an additive component other than the plurality of nanoparticles.

2. The structural body according to claim 1, wherein packing density of the plurality of nanoparticles is equal to or higher than 1% by volume and equal to or lower than 74% by volume.

3. The structural body according to claim 1, wherein packing density of the plurality of nanoparticles is equal to or higher than 34% by volume and equal to or lower than 74% by volume.

4. The structural body according to claim 1, wherein a primary particle diameter of each of the plurality of nanoparticles is equal to or smaller than 11 nm.

5. The structural body according to claim 1, wherein a primary particle diameter of each of the plurality of nanoparticles is equal to or smaller than 7 nm.

6. The structural body according to claim 1, wherein a secondary particle diameter of some of the plurality of nanoparticles is equal to or smaller than 46 nm.

7. The structural body according to claim 1, wherein
the plurality of nanoparticles is covalent-bonded to each other to form a coupled body,
the coupled body has gaps each among adjacent ones of the plurality of nanoparticles, and
the gaps are packed with a thermoplastic resin.

8. The structural body according to claim 7, wherein a volume of the thermoplastic resin being packed is equal to or smaller than a volume of the gaps.

9. The structural body according to claim 1, wherein each of the plurality of nanoparticles is a metal oxide.

10. The structural body according to claim 1, wherein each of the plurality of nanoparticles is an oxide of zirconium, titanium, tin, silicon, aluminum, or zinc.

11. The structural body according to claim 1, wherein each of the plurality of nanoparticles is an oxide of silicon or aluminum.

12. A structural body manufacturing method comprising, after a plurality of alkoxy groups or a plurality of reactive functional groups is used to modify a surface of each of a plurality of nanoparticles, allowing the plurality of alkoxy groups or the plurality of reactive functional groups that has modified the surface of each of the plurality of nanoparticles to be covalent-bonded to each other.

13. The structural body manufacturing method according to claim 12, further comprising, after each of the plurality of nanoparticles that has been modified by the plurality of alkoxy groups is allowed to be dispersed in a solvent, and an acid-and-base forming agent is further added, allowing the solvent to be volatilized while an external stimulus is applied in a predetermined mold or on a predetermined substrate.

14. The structural body manufacturing method according to claim 13, wherein light irradiation or heating is used as the external stimulus.

15. The structural body manufacturing method according to claim 12, further comprising, after each of the plurality of nanoparticles that has been modified by the plurality of reactive functional groups is allowed to be dispersed in a solvent, and a reaction initiating reagent is further added, allowing the solvent to be volatilized while an external stimulus is applied in a predetermined mold or on a predetermined substrate.

16. The structural body manufacturing method according to claim 15, wherein light irradiation or heating is used as the external stimulus.

17. The structural body manufacturing method according to claim 12, further comprising adding a metal alkoxide compound represented by General Formula (1) described below or a metal chloride represented by General Formula (2) described below to modify the surface of each of the plurality of nanoparticles with the plurality of alkoxy groups. [Chemical Formula 1]
R¹ₓM(OR²)₄₋ₓ (1)
R¹ₓMCl₄₋ₓ (2)
(R¹ is, separately and independently, a methyl group, an ethyl group, a propyl group, an isopropyl group, a butyl group, a pentyl group, a hexyl group, a heptyl group, an octyl group, a decyl group, a dodecyl group, a hexadecyl group, a vinyl group, or a phenyl group. R² is a methyl group, an ethyl group, a propyl group, or an isopropyl group. M is, separately and independently, silicon, aluminum, titanium, tin, or zinc. X is 0 or an integer equal to or above 1 and equal to or below 2.)

18. The structural body manufacturing method according to claim 13, further comprising adding an organic silane compound represented by General Formula (3) described below or General Formula (4) described below to modify the surface of each of the plurality of nanoparticles with the plurality of reactive functional groups. [Chemical Formula 2]
R³_{y}Si(OR⁴)_{4-y} (3)
R³_{y}SiCl_{4-y} (4)
(R³ is, separately and independently, a hydrogen atom, a vinyl group, an acryloxy group, a methacryloxy group, an aminopropyl group, a glycidoxypropyl group, or a mercaptopropyl group. R⁴ is a methyl group, an ethyl group, a propyl group, or an isopropyl group. y is an integer equal to or above 1 and equal to or below 3.)

19. The structural body manufacturing method according to claim 12, further comprising, after the plurality of nanoparticles is allowed to be covalent-bonded to each other to form a coupled body, allowing a thermoplastic resin to be permeated into gaps each among adjacent ones of the plurality of nanoparticles.

20. A precursor composition comprising a metal alkoxide molecule represented by General Formula (5) described below.
[Chemical Formula 3]
R⁵ₓM(OR⁶)₄₋ₓ (5)
(R⁵ is, separately and independently, a methyl group, an ethyl group, a propyl group, an isopropyl group, a butyl group, a pentyl group, a hexyl group, a heptyl group, an octyl group, a decyl group, a dodecyl group, a hexadecyl group, a vinyl group, or a phenyl group. R⁶ is a methyl group, an ethyl group, a propyl group, or an isopropyl group. M is, separately and independently, silicon, aluminum, titanium, tin, or zinc. X is 0 or an integer equal to or above 1 and equal to or below 2.)
